# EUROPÄISCHE PATENTANMELDUNG

(11) **EP 0 615 148 A2**
(43) Veröffentlichungstag der Anmeldung: **14.09.1994**
(21) Anmeldenummer: 94102864.9
(22) Anmeldetag: 25.02.1994
(51) Int. Cl.: G02B 27/28

(54) **Verfahren und Vorrichtung zur Polarisation von Licht**

(30) Priorität: 08.03.1993 DE 4307178
(71) Anmelder: Lüder, Ernst, Prof. Dr.-Ing. habil., D-70550 Stuttgart (DE)
(72) Erfinder: Lüder, Ernst, Prof. Dr.-Ing. habil., D-70550 Stuttgart (DE); Glück, Joachim, Dipl.-Ing., D-70374 Stuttgart (DE)
(74) Vertreter: Möbus, Rudolf, Dipl.-Ing.

(57) **Zusammenfassung**

Ein Verfahren und eine Vorrichtung zur Polarisation von Licht, mit deren Hilfe ein unpolarisierter Lichtstrahl (15) in zwei senkrecht zueinander linear polarisierte Lichtstrahlen (16, 17) aufgespaltet und anschließend einer dieser linear polariserten Lichtstrahlen (17) in die Polarisationsrichtung des anderen Lichtstrahles (16) gedreht und diesem Lichtstrahl (16) räumlich überlagert wird, um einen linear polarisierten Lichtstrahl hoher Intensität zu erhalten.

## Beschreibung

Die Erfindung betrifft ein Verfahren und eine Vorrichtung zur Polarisation von Licht.

Eine Polarisation von Licht ist für viele technische Anwendungen eine Notwendigkeit. So können beispielsweise Displays mit Flüssigkristallzellen nur mit linear polarisiertem Licht betrieben werden. Solche Flüssigkristall-Displays können als Lichtventile in Projektoren eingesetzt werden. Das unpolarisierte Licht der Projektorlampen muß dazu zunächst linear polarisiert werden. Bei Anwendung herkömmlicher Polarisationsmethoden, die mit absorbierenden Polarisationsfiltern arbeiten, gehen 50 % der Lichtintensität verloren. Für eine gute Ausleuchtung der Flüssigkristall-Lichtventile ist jedoch eine möglichst hohe Lichtintensität mit einer gleichmäßigen Verteilung über die gesamte Fläche des Lichtventiles wünschenswert.

Der Erfindung liegt daher die Aufgabe zugrunde, ein Verfahren und eine Vorrichtung anzugeben, die eine Polarisation von Licht mit den angegebenen Eigenschaften ermöglichen.

Die Aufgabe wird mit einem Verfahren der eingangs genannten Art gelöst, das sich erfindungsgemäß durch folgende Schritte auszeichnet:
- Aufspaltung eines von einer Lichtquelle emittierten unpolarisierten Lichtstrahles in zwei senkrecht zueinander linear polarisierte Lichtstrahlen,
- Drehung der Polarisationsrichtung eines dieser Lichtstrahlen in die Polarisationsrichtung des anderen Lichtstrahles,
- räumliche Überlagerung des Lichtstrahles mit gedrehter Polarisationsrichtung mit dem Lichtstrahl unveränderter Polarisationsrichtung.

Mit dem erfindungsgemäßen Verfahren wird fast das gesamte von der Lichtquelle emittierte Licht in gleicher Richtung linear polarisiert. Darüberhinaus steht dieses Licht in einem Strahl hoher Intensität an einem Ort zur Verfügung. Das beschriebene Verfahren eignet sich somit insbesondere zum gleichmäßigen Ausleuchten eines Flüssigkristall-Lichtventiles in Projektoren. Dabei kann die Drehung der polarisationsrichtung des einen der ursprünglich gebildeten linear polarisierten Strahlen in zwei Stufen erfolgen. Der eine linear polarisierte Lichtstrahl kann zunächst in einen zirkular polarisierten Lichtstrahl umgewandelt und anschließend linear polarisiert werden mit einer Polarisationsrichtung, die derjenigen des Lichtstrahles unveränderter Polarisationsrichtung entspricht. Die Drehung der Polarisationsrichtung des einen Lichtstrahles in zwei Stufen kann dabei zweckmäßigerweise durch einen zweimaligen Durchgang des Lichtstrahles durch eine doppelbrechende Platte solcher Dicke, daß der austretende Lichtstrahl gegenüber dem eintretenden Lichtstrahl einen Gangunterschied von einem Viertel der Wellenlänge des Lichtstrahles aufweist, bewirkt werden. Der zweimalige Durchgang durch eine sogenannte λ/4-Platte entspricht einem Durchgang durch eine λ/2-Platte, die eine 90°-Drehung der Polarisationsrichtung von linear polarisiertem Licht verursacht.

Die Vorrichtung zur Durchführung des Verfahrens zur Polarisation von Licht weist erfindungsgemäß eine Lichtquelle mit einem Reflektor, einen vor der Lichtquelle angeordneten Polarisator, eine zwischen der Lichtquelle und dem Polarisator angeordnete λ/4-Platte und auf einer der Licht-Austrittsseiten des Polarisators einen totalreflektierenden Spiegel auf. Die erfindungsgemäße Vorrichtung enthält somit außer der Lichtquelle und dem Polarisator nur wenige zusätzliche Elemente. Die Vorrichtung ist daher sehr platzsparend und kann problemlos auch in Projektoren eingebaut werden. Besondere Vorteile hinsichtlich der erzielbaren Lichtintensität des linear polarisierten Lichtes ergeben sich, wenn eine Metall-Dampflampe als Lichtquelle verwendet wird, die ohne Glühwendel arbeitet, die das vom Reflektor reflektierte Licht absorbieren würde. Stattdessen wird das emittierende Licht mittels Gasentladung zwischen einer Anode und einer Kathode erzeugt.

Die Funktionsweise der Vorrichtung und damit auch das erfindungsgemäße Verfahren werden nachfolgend anhand der Zeichung näher erläutert.

Im einzelnen zeigen:
- Fig. 1: eine Prinzipdarstellung einer erfindungsgemäßen Vorrichtung mit eingezeichneten Strahlengängen aller Lichtstrahlen;
- Fig. 2a, 2b: Prinzipdarstellung der Drehung der Polarisationsrichtung eines Lichtstrahles um 90°;
- Fig. 3: Prinzipdarstellung des Strahlenganges des ersten linear polarisierten Lichtstrahles;
- Fig. 4: Prinzipdarstellung des Strahlenganges des zweiten linear polarisierten Lichtstrahles.

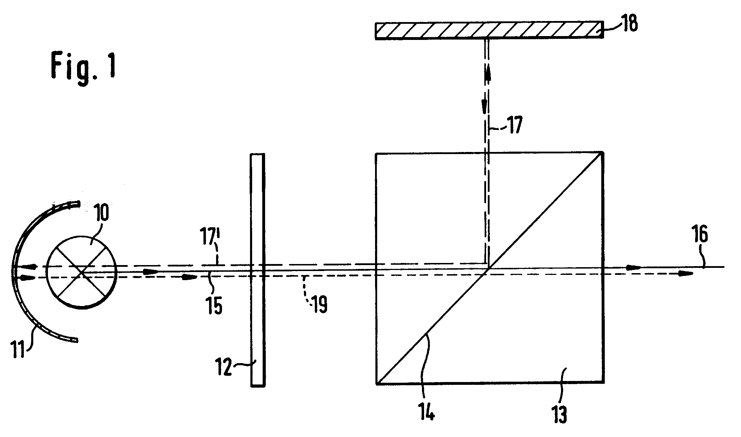

Die Vorrichtung nach Fig. 1 wird von einer Lichtquelle 10 gebildet, die auf ihrer Rückseite von einem Reflektor 11 umgeben ist. Vor der Lichtquelle 10 ist eine doppelbrechende Platte 12 angeordnet, deren Dicke so gewählt ist, daß ein auf ihrer Rückseite austretender Lichtstrahl gegenüber dem eintretenden Lichtstrahl einen Gangunterschied von λ/4, also einem Viertel der Wellenlänge λ aufweist. Hinter der doppelbrechenden Platte 12 ist ein Polarisator 13 in Form eines polarisierenden Strahlteilerwürfels angeordnet. Dieser Polarisator 13 weist eine diagonal verlaufende Grenzfläche 14 auf. Das von der Lichtquelle 10 emittierte unpolarisierte Licht, das in Fig. 1 durch die durchgezogene schwarze Linie 15 charakterisiert ist, tritt unbeeinflußt durch die doppelbrechende λ/4-Platte 12 hindurch und trifft auf die Grenzfläche 14 des Polarisators 13. An der Grenzfläche 14 wird der Strahl 15 aufgespaltet in ein die Grenzfläche 14 passierenden linear polarisierten Lichtstrahl 16, der wieder mit einer durchgezogenen schwarzen Linie in Fig. 1 markiert ist. Ein zweiter Teil des Strahles, in Fig. 1 gestrichelt eingezeichnet, wird an der Grenzfläche 14 reflektiert und ebenfalls linear polarisiert, wobei jedoch die Polarisationsrichtung des Strahles 17 senkrecht zur Polarisationsrichtung des Strahles 16 ausgerichtet ist. Dieser Anteil 17 geht bei herkömmlichen Polarisationsverfahren verloren. Beim erfindungsgemäßen Verfahren jedoch wird der Strahl 17 an einem totalreflektierenden Spiegel 18 oberhalb des Polarisators 13 wieder auf die Grenzfläche 14 zurückreflektiert und dort ein weiteres Mal totalreflektiert auf die doppelbrechende λ/4-Platte 12. Beim Durchgang durch die Platte 12 wird der linear polarisierte Lichtstrahl 17 in einen zirkular polarisierten Lichtstrahl 17' umgewandelt. Anschließend wird der Strahl 17' am Reflektor 11 reflektiert und passiert ein zweites Mal die λ/4-Platte 12. Dabei wird der zirkular polarisierte Strahl 17' linear polarisiert, was in Fig. 1 durch die gepunktete Linie 19 angedeutet ist, wobei die Polarisationsrichtung des Strahles 19 nun mit derjenigen des Strahles 16 übereinstimmt. Der Strahl 19 gelangt auf gleichem Wege wie der Strahl 16 durch den Polarisator 13 und passiert dessen Grenzfläche 14 ungehindert. Es kommt somit zu einer räumlichen Überlagerung der beiden gleichsinnig polarisierten Lichtstrahlen 16 und 19, die zusammen nahezu die Intensität des ursprünglich von der Lichtquelle 10 emittierten unpolarisierten Lichtes aufweisen.

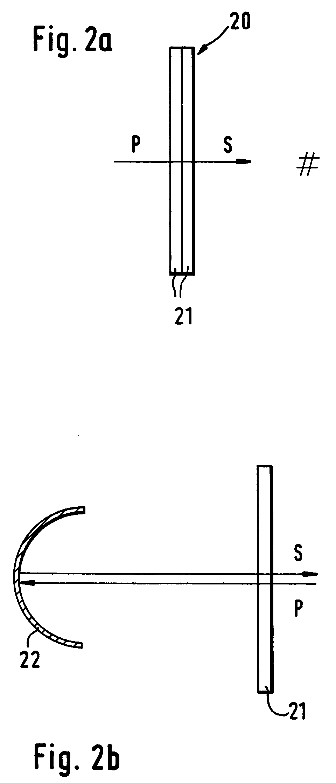

Die Drehung der Polarisationsrichtung des linear polarisierten Lichtstrahles 17 ist in den Figuren 2a und 2b nochmals verdeutlicht. In Fig. 2a ist der Durchgang eines linear polarisierten Lichtstrahles P durch eine λ/2-Platte 20, das heißt einer doppelbrechenden Platte, die einen Gangunterschied des aus ihr austretenden Lichtstrahles S gegenüber dem einfallenden Lichtstrahl P von einer halben Wellenlänge λ bewirkt, dargestellt. Der Durchgang eines linear polarisierten Lichtstrahles P durch eine solche λ/2-Platte bewirkt eine Drehung der Polarisationsrichtung um 90°. Die λ/2-Platte 20 aus Fig. 2a ist aus zwei hintereinander angeordneten λ/4-Platten 21 zusammengesetzt denkbar. Der Anordnung nach Fig. 2a exakt gleichwirkend ist die Anordnung nach Fig. 2b. Hier ist eine einzige λ/4-Platte 21 vorgesehen, durch die ein linear polarisierter Lichtstrahl P zunächst von rechts nach links hindurchtritt, anschließend an einem Reflektor 22 total reflektiert und ein zweites Mal - nun von links nach rechts - durch die λ/4-Platte 21 hindurchtritt. Nach dem ersten Durchtritt des Lichstrahles P durch die λ/4-Platte 21 wird der Lichtstrahl zirkular polarisiert und beim zweiten Durchgang durch die λ/4-Platte 21 wieder linear polarisiert, wobei der entstehende linear polarisierte Lichtstrahl S eine gegenüber dem Lichtstrahl P um 90° gedrehte Polarisationsrichtung aufweist. Die Konfiguration nach Fig. 2a entspricht derjenigen aus Fig. 1, womit gezeigt ist, daß die Anordnung nach Fig. 1 eine 90°-Drehung der Polarisationsrichtung des Lichtstrahles 17 bewirkt.

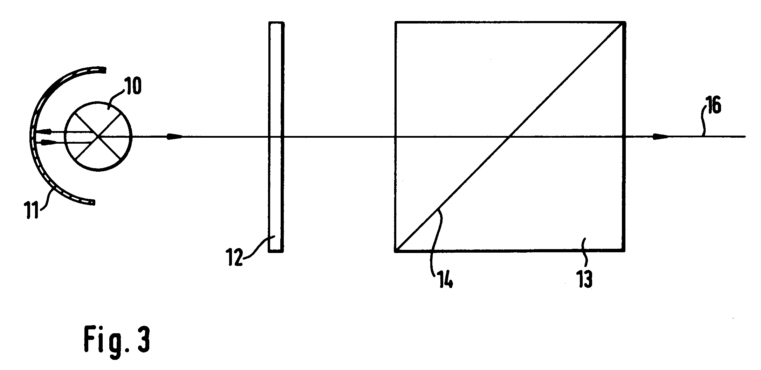

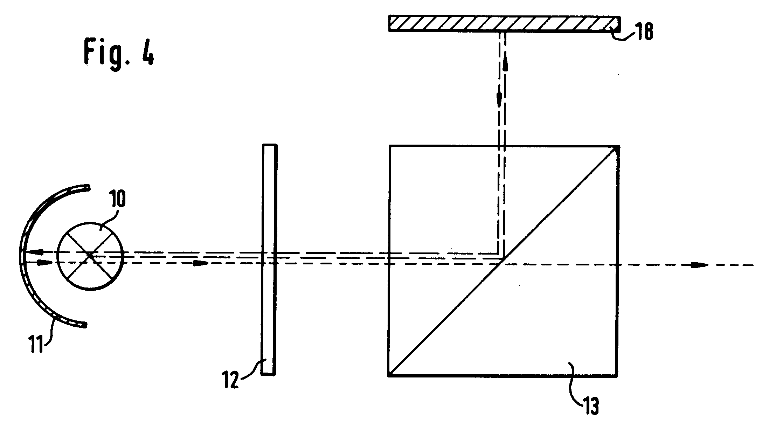

Die Figuren 3 und 4 entsprechen Fig. 1 und zeigen noch einmal isoliert den Strahlengang des Lichtstrahles 16 (Fig. 3) beziehungsweise des Lichtstrahles 17 und dessen Umwandlung in die Strahlen 17' und 19 (Fig. 4).

## Patentansprüche

1. Verfahren zur Polarisation von Licht, gekennzeichnet durch folgende Schritte:
- Aufspaltung eines von einer Lichtquelle (10) emittierten unpolarisierten Lichtstrahles (15) in zwei senkrecht zueinander linear polarisierte Lichtstrahlen (16, 17),
- Drehung der Polarisationsrichtung eines der Lichtstrahlen (17) in die Polarisationsrichtung des anderen Lichtstrahles (16),
- räumliche Überlagerung des Lichtstrahles (19) mit gedrehter Polarisationsrichtung mit dem Lichtstrahl (16) unveränderter Polarisationsrichtung.

2. Verfahren nach Anspruch 1, dadurch gekennzeichnet, daß der eine linear polarisierte Lichtstrahl (17) zunächst in einen zirkular polarisierten Lichtstrahl (17') umgewandelt und anschließend linear polarisiert wird mit einer Polarisationsrichtung, die derjenigen des Lichtstrahles (16) unveränderter Polarisationsrichtung entspricht.

3. Verfahren nach Anspruch 2, dadurch gekennzeichnet, daß die Drehung der Polarisationsrichtung des einen Lichtstrahles (17) durch zweimaligen Durchgang durch eine doppelbrechende Platte (12) solcher Dicke, daß der aus der Platte (12) austretende Lichtstrahl gegenüber dem eintretenden Lichtstrahl einen Gangunterschied von einem Viertel der Wellenlänge (λ) des Lichtstrahles aufweist, bewirkt wird.

4. Vorrichtung zur Durchführung des Verfahrens nach einem der Ansprüche 1 bis 3, dadurch gekennzeichnet, daß sie eine Lichtquelle (10) mit einem Reflektor (11), einen vor der Lichtquelle (10) angeordneten Polarisator (13), eine zwischen der Lichtquelle (10) und dem Polarisator (13) angeordnete λ/4-Platte (12) und auf einer der Licht-Austrittsseiten des Polarisators (13) einen totalreflektierenden Spiegel (18) aufweist.

5. Vorrichtung nach Anspruch 4, dadurch gekennzeichnet, daß die Lichtquelle (10) eine Metalldampflampe ist.
